# EUROPÄISCHE PATENTSCHRIFT

(11) **EP 3 737 855 B1**
(45) Veröffentlichungstag und Bekanntmachung des Hinweises auf die Patenterteilung: **20.04.2022**
(21) Anmeldenummer: 18819081.3
(22) Anmeldetag: 11.12.2018
(51) Int. Cl.: F03B 17/06, F03D 3/00, F03D 3/06, F03D 3/04

(54) **WASSER- UND/ODER WINDKRAFTWERK**
WATER AND/OR WIND POWER PLANT
CENTRALE HYDRAULIQUE ET / OU ÉOLIENNE

(30) Priorität: 11.01.2018 DE 102018100546
(43) Veröffentlichungstag der Anmeldung: 18.11.2020
(73) Patentinhaber: Schmetzer, Alexandra, 95448 Bayreuth (DE)
(72) Erfinder: SCHMETZER, Helmut, verstorben (DE)
(74) Vertreter: Lindner Blaumeier Patent- und Rechtsanwälte
(86) Internationale Anmeldenummer: PCT/EP2018/084263
(87) Internationale Veröffentlichungsnummer: WO 2019/137718

(56) Entgegenhaltungen:
- WO-A1-2013/171551
- GB-A- 2 304 826
- US-A- 1 425 487
- US-A1- 2002 187 038
- US-A1- 2007 098 542
- US-A1- 2012 189 446
- US-A1- 2012 228 879

## Beschreibung

Die Erfindung betrifft ein Wasser- und/oder Windkraftwerk, umfassend eine um eine Drehachse drehbar gelagerte Trageinrichtung mit mehreren an der Trageinrichtung um eine jeweilige Schwenkachse schwenkbar gelagerten Anströmelementen, die durch eine Luft- oder Wasserströmung anströmbar sind, um eine Drehung der Trageinrichtung anzutreiben, und einen Generator zur Bereitstellung von Strom bei Drehung der Trageinrichtung, wobei die Schwenkachsen gewinkelt, insbesondere mit einem Winkel von mehr als 60° oder senkrecht, zu der Drehachse verlaufen, wobei ein jeweiliger Schwenkbereich des jeweiligen Anströmelements, innerhalb dem das jeweilige Anströmelement um die Schwenkachse verschwenkbar ist, einseitig durch einen Anschlagbereich der Trageinrichtung begrenzt wird, wobei die Anschlagbereiche durch Stangen gebildet werden, die sich parallel zu der Drehachse erstrecken, wobei die Trageinrichtung zwei scheibenförmige Tragelemente umfasst, die in einem Winkel von wenigstens 60°, vorzugsweise senkrecht, zu der Drehachse stehen, in Richtung der Drehachse voneinander beabstandet sind, und an denen zumindest einige der Anströmelemente verschwenkbar gelagert sind.

Methoden zur regenerativen Energiegewinnung, beispielsweise durch Photovoltaik, Windkraft oder Wasserkraft, gewinnen zunehmend an Bedeutung, da diese eine Energiebereitstellung ohne Schadstoffausstoß ermöglichen. Eine Möglichkeit zur Energiegewinnung aus Wasserkraft sind Schaufelräder, bei denen mehrere Schaufeln an einem drehbar gelagerten Rad angeordnet sind. Steht ein solches Schaufelrad teilweise in Wasser, so dass nur einige Schaufeln angeströmt werden, so wird die kinetische Energie der Strömung in eine Rotationsbewegung des Schaufelrads umgesetzt, die beispielsweise mithilfe eines Generators genutzt werden kann, um Strom zu erzeugen.

Aus der Druckschrift DE 10 2009 007 593 A1 ist eine Modifikation eines solchen Schaufelrades bekannt, bei der die Schaufeln verstellbar sind, wodurch eine Rotation des Schaufelrades auch dann erreicht werden kann, wenn dieses vollständig unter Wasser angeordnet wird. Die dort beschriebene Anordnung erfordert jedoch relativ große freie Radien verglichen mit der tatsächlich genutzten Anströmfläche der einzelnen Schaufeln, um ein Umklappen der Schaufeln zu ermöglichen. Zudem resultiert aus dem erforderlichen relativ raschen Umklappen der einzelnen Schaufeln eine deutliche Verwirbelung des Wassers, die zu einer Effizienzreduzierung führen kann.

Die Druckschrift US 2012/189446 A1 offenbart eine Windturbine mit vertikalem Schaft. Mehrere Flügel sind hierbei schwenkbar an einem Speichenrad befestigt. Im senkrecht zum Speichenrad stehenden Zustand werden die Flügel durch stabförmige Anschläge gestoppt. Es können mehrere vertikal übereinander angeordnete Speichenräder genutzt werden, die in zueinander entgegengesetzte Richtungen drehbar sind.

Der Erfindung liegt somit die Aufgabe zugrunde, ein Wasser- bzw. Windkraftwerk anzugeben, das demgegenüber, insbesondere bezüglich einer erreichbaren Effizienz und/oder eines Bauraumverbrauchs, verbessert ist.

Die Aufgabe wird erfindungsgemäß durch ein Wasser- und/oder Windkraftwerk der eingangs genannten Art gelöst, wobei die Tragelemente starr miteinander verbunden sind, wobei die Stangen jeweils an beiden Tragelementen an einer radial von der Drehachse beabstandeten Befestigungsposition befestigt sind.

Erfindungsgemäß wurde erkannt, dass eine Neigung der Schwenkachsen der Anströmelemente zu der Drehachse, insbesondere ein nahezu senkrecht Stehen der Schwenkachsen auf der Drehachse, dazu führt, dass ein Verschwenken der Anströmelemente um 90° oder weniger ausreicht, um auf einer Seite der Drehachse eine erheblich größere Anströmfläche bereitzustellen als auf der gegenüberliegenden Seite der Drehachse, womit bei gleicher Strömungsrichtung auf beiden Seiten der Drehachse, wie sie typischerweise erwartet wird, wenn sich die Trageinrichtung vollständig innerhalb einer Wasser- oder Luftströmung befindet, ein Antrieb einer Drehung der Trageinrichtung um die Drehachse erfolgt. Bei Nutzung einer näherungsweise radförmigen Trageinrichtung führt eine solche Orientierung der Schwenkachsen zudem dazu, dass das Verschwenken im Wesentlichen in Umfangsrichtung dieses Rades erfolgt, so dass ein Verschwenken der Anströmelemente zu einer geringeren Variation der Erstreckung dieser in Radialrichtung des Rades führt, womit das Wasser- bzw. Windkraftwerk in Radialrichtung der Trageinrichtung insgesamt kleiner bauend realisiert werden kann, als wenn eine Verschwenkung parallel zur Drehachse erfolgen würde.

Die Trageinrichtung kann an einem Grundgestell, an einem Fundament oder an Ähnlichem gelagert sein. Die Lagerung kann derart erfolgen, dass die Drehachse horizontal, vertikal oder in einem beliebigen Winkel zu einem Untergrund steht. Wird das Wasser- oder Windkraftwerk an einem Ort genutzt, an dem eine Variation der Richtung der Luft- oder Wasserströmung erwartet wird, kann es vorteilhaft sein, eine vertikale Drehachse zu nutzen. Hierdurch kann das Wasser- oder Windkraftwerk unabhängig von der Wind- bzw. Strömungsrichtung angetrieben werden. Die Drehrichtung der von der Luft- bzw. Wasserströmung angetriebenen Drehung der Trageinrichtung kann aufgrund der durch Verschwenkung der Anströmelemente variablen Anströmflächen unabhängig von der Strömungsrichtung sein. Das erfindungsgemäße Wasser- und/oder Windkraftwerk kann sich somit automatisch auf unterschiedliche Strömungsrichtungen, beispielsweise bei einem Drehen des Windes oder einem Ebbe-Flut-Wechsel, einstellen. Ist die Strömungsrichtung im Wesentlichen statisch, beispielsweise bei einer Anordnung des Wasserkraftwerks in einem Fluss, so kann eine horizontale Anordnung der Drehachse vorteilhaft sein.

Die Anströmelemente können, abgesehen von einer später noch diskutierten Beschränkung eines Schwenkbereichs, frei schwenkbar sein, so dass sie durch die Luft- bzw. Wasserströmung automatisch ausgerichtet werden können. Prinzipiell wäre es jedoch auch möglich, die Anströmelemente dauerhaft mit einer gewissen Kraft zu beaufschlagen, um sie bei einer Abwesenheit von anderen Kräften in eine Vorzugsstellung zu verbringen, und/oder sie durch eine aktive Steuerung einzustellen.

Die Anordnung der Anströmelemente kann insbesondere entlang des Umfangs eines Kreises erfolgen, der die Drehachse umgibt, wobei die Schwenkachsen der Anströmelemente insbesondere in jeweils gleichem Winkelabstand aufeinander folgen. In einer nicht erfindungsgemäßen Ausgestaltung wäre es hierbei möglich, dass die Anströmelemente alle an einer axialen Position der Trageinrichtung, beispielsweise an einer Scheibe oder an mehreren von einer Welle abragenden Streben, gelagert sind. Erfindungsgemäß werden jedoch Anströmelemente genutzt, die an mehreren axial beabstandeten Punkten angeordnet sind. Beispielsweise können an einer um die Drehachse drehbaren Welle zwei beabstandete Scheiben angeordnet sein, an denen jeweils Anströmelemente angeordnet sind, die in einem geschlossenen Schwenkzustand zur Mittelebene zwischen den Scheiben hingeschwenkt sind. Paare von gegenüberliegenden Anströmelementen bilden in diesem Fall eine torartige Anordnung, die geschlossen werden kann, um eine möglichst große Anströmfläche bereitzustellen, oder geöffnet werden kann, um die Anströmfläche zu minimieren. Es ist jedoch auch möglich, mehr als zwei beabstandete Scheiben oder Gruppen von Streben zu nutzen, die jeweilige Anströmelemente tragen.

Die Anströmelemente können derart an der Trageinrichtung gelagert sein, dass ihre jeweiligen Schwenkachse und die Drehachse mit einem Winkel von mehr als 45° oder mehr als 60° gewinkelt zueinander oder senkrecht zueinander verlaufen. Als Winkel zwischen der Schwenkachse und der Drehachse wird hierbei jeweils der kleinste von diesen Achsen eingeschlossene Winkel betrachtet. Besonders bevorzugt stehen die jeweilige Schwenkachse und die Drehachse im Wesentlichen senkrecht zueinander, das heißt, sie schließen einen Winkel von wenigstens 80° oder von wenigstens 85° ein. Anders ausgedrückt verlaufen die Schwenkachsen im Wesentlichen radial zur Drehachse.

Ein jeweiliger Schwenkbereich des jeweiligen Anströmelements, innerhalb dem das jeweilige Anströmelement um die Schwenkachse verschwenkbar ist, wird einseitig durch einen Anschlagbereich der Trageinrichtung begrenzt. Beispielsweise kann ein separates Anschlagelement für jedes der Anströmelemente bereitgestellt werden. Die Anströmelemente können beispielsweise an einer jeweiligen Stange anschlagen, insbesondere wenn sie eine Stellung erreichen, in der ihre Anströmfläche für eine Strömung maximal ist.

Durch das Vorsehen entsprechender Anschlagbereiche wird erreicht, dass, nachdem ein jeweiliges Anströmelement durch die Strömung in eine Stellung gedrückt wurde, in der seine Anströmfläche bzw. der durch sie verursachte Strömungswiderstand maximal ist, ein weiteres Schwenken verhindert wird und stattdessen eine Kraft der Strömung in ein auf die Trageinrichtung ausgeübtes Drehmoment um die Drehachse umgesetzt wird. Dreht sich die Trageinrichtung nun solange weiter, bis die Strömung das Anströmelement auf der anderen Seite der Drehachse in die umgekehrte Richtung drückt, wird diese Bewegung durch den Anschlag am Anschlagbereich nicht verhindert, so dass die Kraft der Strömung das Anströmelement verstellen kann. Somit wird bei einer Bewegung des Anströmelements entgegen der Strömung, z. B. aufgrund einer Drehbewegung der Trageinrichtung um die Drehachse, von der Strömung nur eine erheblich geringere Kraft auf das Anströmelement übertragen. Aufgrund dieser Asymmetrie der Kräfte bei einem Anströmen der jeweiligen Anströmelemente auf verschiedenen Seiten der Drehachse resultiert insgesamt durch die Strömung eine Drehmomentübertragung auf die Trageinrichtung in eine vorgegebene Richtung, die mithilfe des Generators genutzt werden kann, um Strom zu erzeugen.

Die Anschlagbereiche werden durch Stangen gebildet, die sich parallel zu der Drehachse erstrecken. Die Stangen können gegenüber der Drehachse radial nach außen versetzt sein. Beispielsweise können die Stangen an radial von der Drehachse abstehenden, beispielsweise scheibenförmigen Tragelementen angeordnet sein, die vorzugsweise auch die jeweils zugeordneten Anströmelemente lagern.

Werden die Anströmelemente in relativ geringem Winkelabstand voneinander umlaufend um die Drehachse angeordnet, so kann es sein, dass bei einer beispielsweise plattenartigen Ausgestaltung der Anströmelemente ein Anströmelement im Rahmen der Verschwenkung an einer dem Anschlagbereich gegenüberliegenden Seite des Schwenkbereichs an eine Stange anschlagen würde, die den Anschlagbereich für ein weiteres Anströmelement bildet. Um dies zu vermeiden und den Schwenkbereich der Anströmelemente zu vergrößern, können diese eine oder mehrere Ausnehmungen aufweisen, in die Stangen oder andere Elemente, die Anschlagbereiche für andere Anströmelemente bilden, im Rahmen der Verschwenkung eingreifen können.

Die Trageinrichtung umfasst zwei starr miteinander verbundene, scheibenförmige Tragelemente, die in einem Winkel von wenigstens 60°, vorzugsweise senkrecht, zu der Drehachse stehen, in Richtung der Drehachse voneinander beabstandet sind, und an denen zumindest einige der Anströmelemente verschwenkbar gelagert sind, wobei die Stangen jeweils an beiden Tragelementen an einer radial von der Drehachse beabstandeten Befestigungsposition befestigt sind. Durch Nutzung von Stangen, die an zwei verschiedenen Tragelementen befestigt sind, können die Anströmelemente auch dann ausreichend gestützt werden, wenn große Kräfte auf sie wirken. Beispielsweise kann eine Stange jeweils zwei Anströmelemente abstützen. In einem Wasserkraftwerk, dass durch ein Fallrohr aus einer Höhe von zwei Metern beschickt wird und in dem die Anströmelemente eine Fläche von 0,25 m² aufweisen, können z.B. Kräfte von ca. 5000 Newton auf diese Stange wirken.

Die beiden Tragelemente können starr an einer gemeinsamen Welle gelagert sein, die um die Drehachse drehbar gelagert ist. Insbesondere können die Tragelemente als parallele Scheiben ausgebildet sein. Es können auch mehr als zwei Tragelemente genutzt werden, wobei hierbei für jeden Zwischenraum die dortigen Stangen jeweils an beiden den Zwischenraum begrenzenden Tragelementen befestigt sein können. Hierbei kann die Anordnung der Stangen und der Anströmelemente bzw. von deren Schwenkachsen für zwei benachbarte Zwischenräume jeweils so erfolgen, dass sie in Umfangsrichtung zueinander versetzt sind. Dies wird später noch genauer erläutert werden.

Die Anströmelemente können sich jeweils in eine Längsrichtung des jeweiligen Anströmelements senkrecht zu der jeweiligen Schwenkachse erstrecken, wobei bei einem Anliegen des jeweiligen Anströmelements an dem Anschlagbereich die Längsrichtung mit einer durch die Schwenkachse und die Drehachse aufgespannten Ebene einen Winkel von weniger als 30° oder weniger als 15° einschließt oder parallel zu dieser Ebene ist. Besonders bevorzugt ist die Längsrichtung in dieser Schwenkstellung im Wesentlichen parallel zu dieser Ebene, das heißt sie schließt einen Winkel von weniger als 5° oder weniger als 10° mit dieser ein.

Werden mehrere Tragelemente verwendet, können die Anströmelemente an den einander zugewandten Seitenflächen zweier Tragelemente vorzugsweise derart angeordnet werden, dass sie nach Art eines Scheunentors aufeinander zu schwenken, wenn sie in Richtung des Anschlagbereichs schwenken. Bei einem Anschlagen von zueinander gegenüberliegenden Anströmelementen an einer Stange oder einem anderen Anschlagbereich kann hierbei nur ein schmaler Spalt von z.B. maximal 20% oder maximal 10% oder maximal 5% der Ausdehnung der Anströmelemente in Längsrichtung verbleiben. Um ein unabhängiges Verschwenken zu ermöglichen, kann z.B. ein Mindestspalt von z.B. 0.1% oder 1% dieser Ausdehnung vorgesehen sein. Vorzugsweise können die Anströmelemente in der beschriebenen Stellung im Wesentlichen parallel sein und senkrecht auf den Tragelementen stehen. Somit können beispielsweise gleichlange Anströmelemente genutzt werden, deren Länge z.B. wenigstens 40% oder 45% oder 47,5% des Abstands zwischen den Tragelementen beträgt. Wasser oder Luft kann, wenn ein seitliches Ausweichen über die Tragelemente nicht möglich ist, in Axialrichtung nur durch Spalt an dem Anströmelement vorbeigeführt werden. Durch ein ausreichend kleines Spaltmaß kann daher der Wirkungsgrad verbessert werden.

Die Trageinrichtung kann ein Rohr oder eine Welle umfassen, das oder die parallel zur Drehachse verläuft, wobei bei einem Anliegen eines jeweiligen Anströmelements an dem Anschlagbereich der Abstand zwischen der äußeren Mantelfläche des Rohrs oder der Welle und einer radialen Innenfläche des jeweiligen Anströmelements über die gesamte Länge des Anströmelements in Längsrichtung kleiner als 10% der Ausdehnung des Anströmelements in eine parallel zur Schwenkachse verlaufende Hochrichtung ist. Hierdurch kann vermieden werden, dass Wasser oder Luft radial innenseitig an den Anströmelementen vorbeigeführt wird. Vorzugsweise werden noch kleiner Abstände von beispielsweise weniger als 5% oder 10 % der Ausdehnung des Anströmelements in die Hochrichtung verwendet. Um ein ungestörtes Schwenken der Anströmelemente sicherzustellen, kann ein Mindestabstand von 0,1% oder 1% der Ausdehnung des Anströmelements in die Hochrichtung vorgesehen sein. Wird ein Rohr verwendet, kann dieses um eine Welle herum angeordnet sein oder selbst die Welle bilden. Vorzugsweise ist das Rohr starr mit der Trageinrichtung verbunden und dreht sich somit mit.

Es kann vorteilhaft sein, einen relativ großen Außenradius des Rohrs bzw. der Welle zu wählen, beispielsweise einen Außenradius, der wenigstens 20% oder wenigstens 30% des maximalen Radius ist, bis zu dem sich die Anströmelemente erstrecken. Dies kann einerseits vorteilhaft sein, da die Anströmelemente sich typischerweise nicht bis auf sehr kleine Radien erstrecken können, da sich hierbei ihre Bewegungen gegenseitig blockieren könnten. Zudem kann das Rohr bzw. die Welle das Wasser bzw. die Luft in diesem Fall von kleinen Radien, bei denen bei einem Anströmen der Anströmelemente nur ein relativ geringes Drehmoment resultiert, zu größeren Radien umlenken.

Die Trageinrichtung kann die Tragelemente oder zwei starr miteinander verbundene, scheibenförmige Tragelemente umfasst, die in einem Winkel von wenigstens 60°, vorzugsweise senkrecht, zu der Drehachse stehen, in Richtung der Drehachse voneinander beabstandet sind, und an denen zumindest einige der Anströmelemente verschwenkbar gelagert sind, wobei die Tragelemente jeweils als scheibenförmige Platte ausgeführt sind, die abgesehen von Öffnungen, die die Platte auf maximal 5% ihrer Fläche durchsetzen, wasserdicht oder luftdicht ist. Hierdurch kann vermieden werden, dass Wasser oder Luft die Anströmelemente seitlich umströmen kann, wodurch der Wirkungsgrad weiter erhöht werden kann. Unter einer wasserdichten oder luftdichten Platte kann beispielsweise jede Platte aus Kunststoff, Metall oder Ähnlichem verstanden werden, die eine gewisse Mindestmaterialstärke von z.B. 0,1 mm oder 0,5 mm oder 1 mm aufweist. Vorzugsweise durchsetzen die Öffnungen die Platte auf maximal 2% oder 1% der Fläche. Auf Öffnungen kann auch vollständig verzichtet werden.

Das Wasser und/oder Windkraftwerk kann ein Umlenkelement aufweisen, das bezüglich eines die Trageinrichtung drehbar lagernden Grundgestells drehfest angeordnet ist und dass sich parallel zur Drehachse erstreckt und diese in Umfangsrichtung über einen Winkelbereich von wenigstens 40°, insbesondere von wenigstens 60°, umgreift, wobei der Abstand zwischen einer jeweiligen radialen Außenfläche der Tragelemente und der der Drehachse zugewandten Fläche des Umlenkelements in diesem Winkelbereich maximal 20% des Abstands dieser Fläche des Umlenkelements zu der Drehachse ist. Hierdurch kann weitgehend vermieden werden, dass Wasser oder Luft die Anströmelemente radial außenseitig umströmt, wodurch der Wirkungsgrad gesteigert werden kann.

Das Umlenkelement kann z.B. als Leitblech ausgebildet sein und/oder die Form eines Zylindermantelflächensegments aufweisen. Alternativ oder ergänzend kann der Abstand zwischen der jeweiligen radialen Außenfläche der Tragelemente und der der Drehachse zugewandten Fläche des Umlenkelements in dem genannten Winkelbereich maximal 10% oder maximal 5% des Abstands dieser Fläche des Umlenkelements zu der Drehachse sein. Um eine ungestörte Drehung der Trageinrichtung sicherzustellen, kann ein Mindestabstand von z.B. 0,1% oder 1% des Abstands der Fläche zur Drehachse verwendet werden.

Wenn die Strömungsrichtung bekannt ist, kann das Umlenkelement jenen Bereich umgreifen, in dem die Anströmelemente am jeweiligen Anschlagbereich anliegen. Hierdurch kann eine Drehmomentübertragung in diesem Bereich maximiert werden und in anderen Bereichen kann die Vorrichtung radial offen sein, so dass Wasser oder Luft, das oder die eine Drehung bremsen könnte, radial ausweichen kann.

Das Umlenkelement kann insbesondere derart angebracht sein, dass der Abstand zur radialen Außenfläche Anströmelemente, wenn diese an dem Anschlagbereich anliegen, bei zumindest einem Drehwinkel der Trageinrichtung kleiner als 20% oder 10% oder 5% des Abstands zwischen Umlenkelement und Drehachse ist. Dies kann den Wirkungsgrad ebenfalls erhöhen.

An dem oder einem die Trageinrichtung drehbar lagernden Grundgestell kann drehfest ein plattenförmiges Sperrelement angeordnet sein, das sich an einer Position in Umfangsrichtung der Tragelemente in einen zwischen den Tragelementen liegenden Bereich erstreckt. Hierdurch kann eine Durchströmung dieses Umfangsabschnitts blockiert werden. Vorzugsweise ist der Umfangsabschnitt ein Umfangsabschnitt, an dem wegen der erwarteten Strömungsrichtung und Drehrichtung der Trageinrichtung kein Drehmoment in eine gewünschte Richtung auf die Trageinrichtung übertragen werden kann. Somit kann erreicht werden, dass weniger Fluid an jenen Bereichen vorbeigeführt wird, an denen ein optimaler Antrieb der Trageinrichtung möglich ist.

Das Sperrelement kann insbesondere derart ausgebildet und angeordnet sein, dass es eine Fläche, die sich in Richtung der Längsachse zwischen den Tragelementen und senkrecht hierzu von der Drehachse bis zu dem äußeren Rand der Tragelemente erstreckt zumindest zu 30% oder 50% oder 70% bedeckt.

Die Trageinrichtung kann die Tragelemente oder zwei starr miteinander verbundene, scheibenförmige Tragelemente umfassen, die in einem Winkel von wenigstens 60°, vorzugsweise senkrecht, zu der Drehachse stehen, und in Richtung der Drehachse voneinander beabstandet sind, wobei an mehreren Positionen in Umfangsrichtung der Tragelemente, die für beide Tragelemente gleich sind, an beiden Tragelementen an der jeweiligen Seitenfläche, die dem jeweils anderen Tragelement zugewandt ist, ein jeweiliges Anströmelement angeordnet ist, wobei an wenigstens einem der Tragelemente an der von dem jeweils anderen Tragelement abgewandten Seitenfläche weitere Anströmelemente angeordnet sind, die in Umfangsrichtung zu den an der dem jeweils anderen Tragelement zugewandten Seite angeordneten Anströmelementen versetzt sind.

Durch die Anordnung von Anströmelementen an der gleichen Position in Umfangsrichtung an einander zugewandten Seitenflächen von Tragelementen kann insbesondere das obig erläuterte scheunentorartige schließen der Anströmelemente erreicht werden, wenn diese zu dem oder dem jeweiligen Anschlagbereich schwenken. Wie obig erläutert kann hierdurch erreicht werden, dass nur ein schmaler Spalt zwischen den Anströmelementen verbleibt. Die versetzte Anordnung auf der abgewandten Seitenfläche ist insbesondere dann vorteilhaft, wenn diese einem weiteren Tragelement zugewandt ist. Hierbei kann wieder gelten, dass die einander zugewandten Seitenflächen Anströmelemente an gleichen Positionen in Umfangsrichtung aufweisen, so dass wiederum eine scheunentorartige Anordnung entstehen kann. Insgesamt können somit in benachbarten Zwischenräumen in Umfangsrichtung jeweils mehrere scheunentorartige Anordnungen der Anströmelemente resultieren, wobei diese Anordnungen um einen gewissen Winkel in Umfangsrichtung zueinander versetzt sind. Vorzugsweise werden die Anströmelemente in jedem der Zwischenräume mit gleichem Winkelabstand in Umfangsrichtung verteilt angeordnet. Die Winkelverschiebung zwischen den Zwischenräumen kann insbesondere dem halben Winkelabstand zwischen zwei Anströmelementen innerhalb des gleichen Zwischenraums entsprechen. Anders ausgedrückt sind die Anordnungen in den Zwischenräumen um eine halbe Unterteilung verschoben. Hierdurch kann erreicht werden, dass das auf die Trageinrichtung übertragene Drehmoment weniger stark über die Zeit variiert, da ein gleichmäßigerer Antrieb erfolgt.

Die Trageinrichtung kann eine Vielzahl von in Richtung der Drehachse voneinander beabstandeten Tragelementen aufweisen. Somit kann auch eine Vielzahl von Zwischenräumen mit darin angeordneten Anströmelementen bereitgestellt werden, beispielsweise mehr als 20 oder mehr als 50 Zwischenräume. Eine vielfache derartige Unterteilung in Richtung der Drehachse kann vorteilhaft sein, um Belastungen einzelner Komponenten, beispielsweise aufgrund von großen auftretenden Hebeln, zu reduzieren.

Werden mehr als zwei Tragelemente verwendet, können die obigen Ausführungen bezüglich eines jeweiligen Paars von Tragelementen auf jedes Paar benachbarter Tragelemente oder auch nur auf Teile der Paare oder nur ein einzelnes der Paare übertragen werden. Hierbei können alle Tragelemente, außer jenen, die am Rand der Trageinrichtung liegen, jeweils Teil von zwei dieser Paare sein, da sie zwei benachbarte Tragelemente haben.

Werden die Anschlagbereiche durch Stangen gebildet und sind, wie obig erläutert, die Anströmelemente in benachbarten Zwischenräumen zueinander in Umfangsrichtung versetzt angeordnet, so ist es zweckmäßig, eine solche Versetzung auch für die Stangen durchzuführen. Die Stangen können somit nicht durchgehend über mehrere Zwischenräume verlaufen, sondern eine Stange in einer bestimmten Umfangsposition kann beispielsweise in aufeinanderfolgenden Zwischenräumen abwechselnd vorhanden sein und fehlen.

Vorzugsweise wird das Wasser- und/oder Windkraftwerk derart in einer Strömung angeordnet, dass die Drehachse im Wesentlichen senkrecht zu einer Strömungsrichtung steht. Die Schwenkachsen verlaufen, wie vorangehend erläutert, vorzugsweise im Wesentlichen radial zu der Drehachse. Durch die obig beschriebene Anordnung der Elemente zueinander kann erreicht werden, dass dann, wenn das Anströmelement an dem Anschlagbereich anliegt, zumindest in einer Drehstellung der Trageinrichtung eine Anströmfläche, die durch die Längsrichtung und eine in Richtung der Schwenkachse verlaufende Querrichtung des Anströmelements aufgespannt ist, im Wesentlichen senkrecht zu der Strömungsrichtung steht. Hierdurch erfolgt ein maximaler Kraftübertrag von der Strömung auf das Anströmelement und somit auch ein maximaler Drehmomentübertrag auf die Trageinrichtung, womit mit hoher Effizienz Strom erzeugt werden kann.

Der Schwenkbereich kann eine offene Schwenkstellung umfassen, in der der Winkel zwischen der Längsrichtung und der durch die Schwenkachse und die Drehachse aufgespannten Ebene wenigstens 60° oder wenigstens 75° ist. Vorzugsweise wird in der offenen Schwenkstellung ein Winkel zwischen Längsrichtung und dieser Ebene von wenigstens 80° oder wenigstens 85° erreicht, so dass die Längsrichtung in anderen Worten im Wesentlichen senkrecht zu dieser Ebene steht. Der Schwenkbereich wird vorzugsweise derart begrenzt, dass eine vollständig senkrechte Stellung vermieden wird, um ein durch die Strömung ausgelöstes Rückschwenken des Anströmelements zu dem Anschlagbereich hin zu erleichtern.

Wie vorangehend erläutert, kann das Wasser- und/oder Windkraftwerk derart in einer Strömung angeordnet werden, dass in zumindest einer Drehstellung der Trageinrichtung die durch die Schwenkachse und die Drehachse aufgespannte Ebene im Wesentlichen senkrecht zu der Strömungsrichtung steht. In der offenen Schwenkstellung kann die Anströmfläche des Anströmelements insbesondere unabhängig von einer Drehstellung der Trageinrichtung zumindest näherungsweise parallel zu der Strömungsrichtung stehen, womit in der offenen Schwenkstellung nur sehr wenig Kraft von der Strömung auf das Anströmelement übertragen wird und somit auch nur ein geringes Drehmoment über das Anströmelement auf die Trageinrichtung übertragen wird. Aufgrund der Verschwenkbarkeit der Anströmelemente kann somit erreicht werden, dass auf gegenüberliegenden Seiten der Drehachse deutlich unterschiedliche Größen von Drehmomenten auf die Trageinrichtung übertragen werden, womit ein Gesamtdrehmoment in eine Richtung resultiert und somit der Generator angetrieben werden kann.

Der Schwenkbereich für ein jeweiliges Anströmelement kann an einem von dem Anschlagbereich abgewandten Ende des Schwenkbereichs durch einen weiteren Anschlagbereich der Trageinrichtung oder durch ein weiteres Anströmelement begrenzt werden. Vorzugsweise wird der Schwenkbereich derart beschränkt, dass der Winkel zwischen der Längsrichtung und der durch die Schwenkachse und die Drehachse aufgespannten Ebene bei einem Anschlag des Anströmelements an dem weiteren Anschlagbereich bzw. an dem weiteren Anströmelement, wenn dieses maximal verschwenkt ist, maximal 90°, vorzugsweise maximal 80° oder maximal 85° ist. Hierdurch kann erreicht werden, dass das Anströmelement durch die Strömung selbst wieder von dem weiteren Anschlagbereich bzw. dem weiteren Anströmelement weg und in Richtung des Anschlagbereichs verschwenkt werden kann.

Ein Anschlag an einem weiteren Anströmelement ist insbesondere dann möglich, wenn die Anströmelemente in Umfangsrichtung Abstände voneinander aufweisen, die kleiner sind als die Ausdehnung der jeweiligen Anströmelemente senkrecht zur Schwenkachse. Im Rahmen des Aufschwingens bzw. des Wegschwingens von dem Anschlagbereich kann ein Anströmelement zunächst an einem weiteren Anströmelement anschlagen und dieses hierdurch ebenfalls verstellen. Aneinander anschlagende Anströmelemente bzw. Anströmelemente in einer offenen Schwenkstellung können somit zumindest teilweise lamellenartig aneinander liegen bzw. fächerartig aufeinander aufliegen.

Die Anströmelemente können in einem mittleren Abschnitt die Form einer ebenen Platte aufweisen, die sich parallel zu der Schwenkachse erstreckt, wobei ein bezüglich der Drehachse radial außenliegender und/oder radial innenliegender Randabschnitt des jeweiligen Anströmelements gegenüber dem mittleren Abschnitt abgekantet ist. Eine derartige Form der Anströmelemente kann einerseits die Stabilität, insbesondere die Verwindungssteifheit, erhöhen. Zudem können die abgekanteten Bereiche genutzt werden, um die Anströmelemente an dem jeweiligen Tragelement zu befestigen. Beispielsweise kann das Tragelement eine Lasche aufweisen und ein Bolzen kann durch diese Lasche und einen Abgekanteten Bereich geführt werden, um ein Drehlager zu bilden. Solche Laschen können beispielsweise relativ einfach hergestellt werden, wenn das Tragelement aus Blech besteht, also beispielsweise eine Blechscheibe ist. Beispielsweise durch Stanzen oder Laserschneiden kann eine Lasche in dem Blech freigelegt und abgekantet werden.

An einer radialen Innenseite der Anströmelemente kann die Abkantung im Wesentlichen senkrecht, beispielsweise mit einem Winkel zwischen 80° und 100°, sein. An der radialen Außenseite kann eine weniger steile Abkantung von beispielsweise zwischen 45° und 90° verwendet werden. Dies kann ein Einströmen von Luft oder Wasser zwischen dem Anströmelement und dem Tragelement erleichtern und somit ein Schließen des Anströmelements unterstützen.

Die Anströmelemente können, wie erläutert, in dem Randabschnitt oder in den Randabschnitten eine Lagereinrichtung zur schwenkbaren Lagerung an der Trageinrichtung aufweisen.

Im allgemeinen können die Anströmelemente im Wesentlichen plattenförmig sein. Eine Plattenfläche kann durch die Schwenkachse und die Längsrichtung des jeweiligen Anströmelements aufgespannt werden. In Richtung senkrecht hierzu kann das Anströmelement relativ dünn sein. Durch eine plattenartige Ausgestaltung der Anströmelemente kann die senkrecht zu einer Strömungsrichtung stehende Fläche durch das vorangehend erläuterte Verschwenken des jeweiligen Anströmelements sehr stark variiert werden.

Die Anströmelemente können an genau einer Kante eine Lagereinrichtung zur schwenkbaren Lagerung an der Trageinrichtung aufweisen. Beispielsweise kann an einer Kante der Platte ein Teil eines Scharniers, beispielsweise zwei abstehende Zapfen, die in Ausnehmungen der Trageinrichtung eingreifen oder Ähnliches, vorgesehen sein.

Die Trageinrichtung kann eine Welle, die um die Drehachse drehbar gelagert ist, und wenigstens ein mit der Welle starr verbundenes und von dieser radial abstehendes, scheibenförmiges, Tragelement umfassen, an dem die Anströmelemente verschwenkbar gelagert sind. Erfindungsgemäß werden zwei in Axialrichtung der Welle voneinander beabstandete, insbesondere parallele, Scheiben als Tragelemente genutzt. Dies können die bereits diskutierten starr miteinander verbundenen scheibenförmigen Tragelemente sein. Die Anströmelemente können sich jeweils zum Mittelpunkt zwischen den Scheiben hin strecken und nach Art eines Flügeltores in die offene Schwenkstellung verbringbar sein. Offensichtlich sind jedoch auch eine Vielzahl anderer Ausgestaltungen möglich. Alternativ können entlang der Welle auch mehr als zwei, beispielsweise wenigstens drei, vier oder fünf, derartige Scheiben mit daran gelagerten Anströmelementen angeordnet sein.

Die Anströmelemente können in einem durch eine Hülle abgeschlossenen Innenraum aufgenommen sein, wobei die Hülle derart an der Trageinrichtung befestigt ist, dass sie bei einer Drehung der Trageinrichtung um die Drehachse mitgedreht wird, wobei die Hülle für eine Wasser- und/oder Luftströmung zumindest teilweise durchlässig ist. Die Hülle kann den Innenraum für sich genommen oder gemeinsam mit der Trageinrichtung vollständig umgeben. Die Hülle kann beispielsweise aus Maschendraht, aus einem Lochblech oder aus Ähnlichem gebildet sein. Sie kann eine Luft- bzw. Wasserströmung im Wesentlichen ungehindert passieren lassen, jedoch Lebewesen, Steine und/oder Verschmutzungen von der inneren Mechanik, insbesondere von den schwenkbar gelagerten Anströmelementen, fernhalten. Durch das Mitdrehen der Hülle kann erreicht werden, dass sich durch die Hülle aufgehaltene Objekte, beispielsweise Schmutz, an der strömungszugewandten Seite an der Hülle anlagern und nach dem Drehen der Trageinrichtung und somit auch der Hülle auf der strömungsabgewandten Seite wieder aus der Hülle ausgespült werden.

Die Trageinrichtung kann über ein Getriebe mit dem Generator gekoppelt sein. Die Trageinrichtung dreht sich in Abhängigkeit der konkreten Betriebsbedingungen mit unterschiedlichen Drehzahlen. Der im Generator erzeugte Strom sollte daher typischerweise gleichgerichtet oder auf eine feste Frequenz umgerichtet werden. Soll beispielsweise aus Wellen, einer Meeresströmung oder einer Flussströmung Energie gewonnen werden, werden für die Rotation der Trageinrichtung typischerweise relativ geringe Frequenzen von weniger als 1 Hz oder von wenigen Hertz erreicht. Zum Um- bzw. Gleichrichten von Strom ist es jedoch typischerweise vorteilhaft, Strom mit höheren Frequenzen von beispielsweise wenigstens 10 Hz zu nutzen. Entsprechende Frequenzen können erreicht werden, indem die Drehzahl des Generators über ein Getriebe erhöht wird, das ein Übersetzungsverhältnis < 1 aufweist. Bevorzugt wird ein Planetengetriebe genutzt, da dieses sehr kompakt gebaut und gut gegen widrige Umgebungsbedingungen abgeschlossen werden kann. Alternativ oder ergänzend zur Nutzung eines Getriebes zur Erreichung von höheren Stromfrequenzen kann ein Generator mit mehreren Polpaaren genutzt werden, um die Frequenz des induzierten Stroms zu erhöhen.

Die Trageinrichtung kann über eine Rücklaufsperre, die eine Drehung entgegen einer Solldrehrichtung blockiert, und/oder über einen Freilauf mit dem Generator gekoppelt sein. Aufgrund des Freilaufs kann eine Momentübertragung zwischen Trageinrichtung und Generator nur bei einer Drehrichtung der Trageinrichtung erfolgen. Durch das beschriebene Vorgehen wird eine eindeutige Drehrichtung für die Trageinrichtung bzw. den Generator und somit eine gleichmäßige Drehung erreicht. Eine gleichmäßige Drehung der Trageinrichtung kann ergänzend oder alternativ auch dadurch erreicht werden, dass eine Trageinrichtung genutzt wird, die zumindest gemeinsam mit den daran gelagerten Anströmelementen ein hohes Trägheitsmoment aufweist oder dass zusätzliche Schwungmassen bzw. ein zusätzliches Schwungrad mit der Trageinrichtung gekoppelt werden. Beispielsweise kann ein Schwungrad über einen Freilauf mit der Trageinrichtung gekoppelt sein. Durch das beschriebene Vorgehen wird erreicht, dass die generierte Strommenge nur langsam variiert, was die weitere Stromkonditionierung bzw. Speicherung erleichtern kann.

Das Wasser- und/oder Windkraftwerk kann ein Gehäuse aufweisen, in dem die Trageinrichtung drehbar gelagert ist und das die Trageinrichtung abgesehen von einer Einlassöffnung und einer Auslassöffnung wasserdicht oder luftdicht umschließt. Dies kann eine bessere Strömungsführung ermöglichen und/oder die Menge an Fluid verringern, die an der Trageinrichtung bzw. den Anströmelementen vorbeigeführt wird. Hierdurch kann ein höherer Wirkungsgrad erreicht werden. Das Gehäuse kann das vorangehend diskutierte Grundgestell sein oder umfassen.

Weitere Vorteile und Einzelheiten der vorliegenden Erfindung ergeben sich aus den folgenden Ausführungsbeispielen sowie den zugehörigen Zeichnungen. Hierbei zeigen schematisch:
- Fig. 1: ein Ausführungsbeispiel eines erfindungsgemäßen Wasser- und/oder Windkraftwerks,
- Fig. 2 und 3: geschnittene Detailansichten des in Fig. 1 dargestellten Wasser- und/oder Windkraftwerks,
- Fig. 4: eine Detailansicht eines weiteren Ausführungsbeispiels eines erfindungsgemäßen Wasser- und/oder Windkraftwerks,
- Fig. 5 und 6: verschiedene Ansichten eines weiteren Ausführungsbeispiels eines erfindungsgemäßen Wasser- und/oder Windkraftwerks, und
- Fig. 7 und 8: Komponenten eines weiteren Ausführungsbeispiels eines erfindungsgemäßen Wasser- und/oder Windkraftwerks.

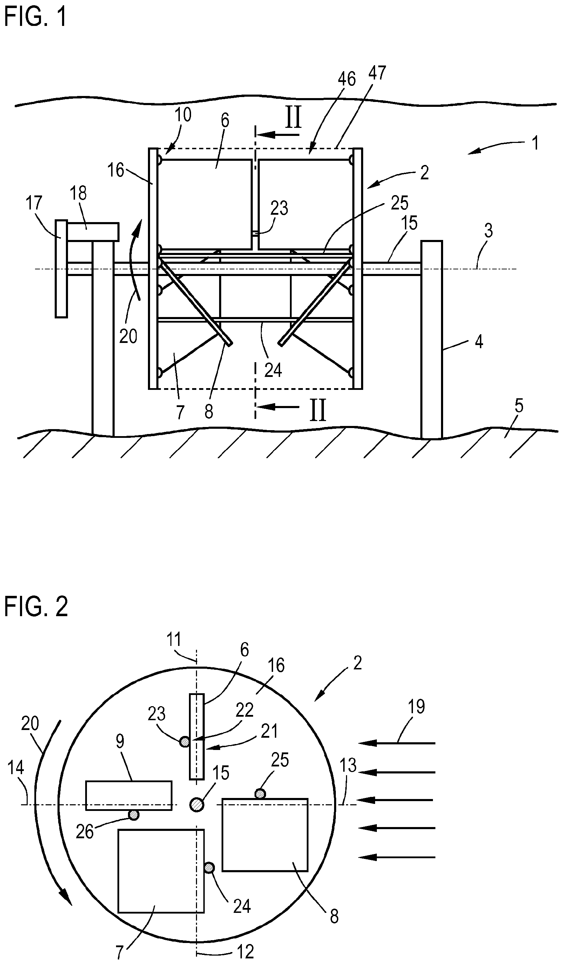

Fig. 1 zeigt ein Ausführungsbeispiel eines Wasser- und/oder Windkraftwerks 1, wobei beispielhaft eine Nutzung in einem Fluss als Wasserkraftwerk gezeigt ist. Das Wasser- und/oder Windkraftwerk 1 umfasst eine Trageinrichtung 2, die um eine Drehachse 3 drehbar an einem Grundgestell 4 gelagert ist. Das Grundgestell 4 ist im gezeigten Beispiel am Flussbett 5 verankert. In anderen Anwendungsfällen könnte das Grundgestell 4 beispielsweise auf einem Meeresgrund verankert sein, wenn Energie aus Meeresströmungen gewonnen werden soll, oder es könnte beispielsweise auf einem Dach oder einer anderen freien Fläche angeordnet werden, um Energie aus Windkraft zu gewinnen. Es ist hierbei selbstverständlich möglich, eine den jeweiligen Betriebsbedingungen angemessene Konstruktion des Wasser- und/oder Windkraftwerks 1 zu nutzen. Insbesondere bei einer Nutzung im Meer oder als Windkraftwerk kann es beispielsweise vorteilhaft sein, die Trageinrichtung 2 derart zu lagern, dass die Drehachse 3 vertikal steht.

Da eine Wasserströmung bzw. bei einer Nutzung als Windkraftwerk eine Luftströmung sowohl oberhalb als auch unterhalb der Drehachse 3 auf die Trageinrichtung 2 einwirkt, ist es für einen Antrieb des Wasser- oder Windkraftwerks gewünscht, dass auch bei im Wesentlichen gleicher Strömung oberhalb und unterhalb der Drehachse 3 ein Antrieb einer Drehung der Trageinrichtung 2 möglich ist. Dies wird in dem Wasser- und/oder Windkraftwerk dadurch erreicht, dass durch schwenkbar gelagerte Anströmelemente 6 bis 9 variable Anströmflächen 21 realisiert werden, wie dies im Folgenden unter zusätzlicher Heranziehung der Fig. 2 erläutert wird.

Fig. 2 zeigt einen Schnitt entlang der Linie II-II in Fig. 1, wobei aus Übersichtlichkeitsgründen ausschließlich die Trageinrichtung 2 mit den daran angeordneten Anströmelementen 6 bis 9 dargestellt ist. Die Trageinrichtung 2 umfasst eine Welle 15, die um die Drehachse 3 drehbar ist, und zwei daran angeordnete scheibenförmige Tragelemente 16, die die einzelnen Anströmelemente 6 bis 9 lagern. In alternativen Ausführungsformen wäre es beispielsweise auch möglich, mehr als zwei Tragelemente 16 an der Welle 15 anzuordnen oder Ähnliches.

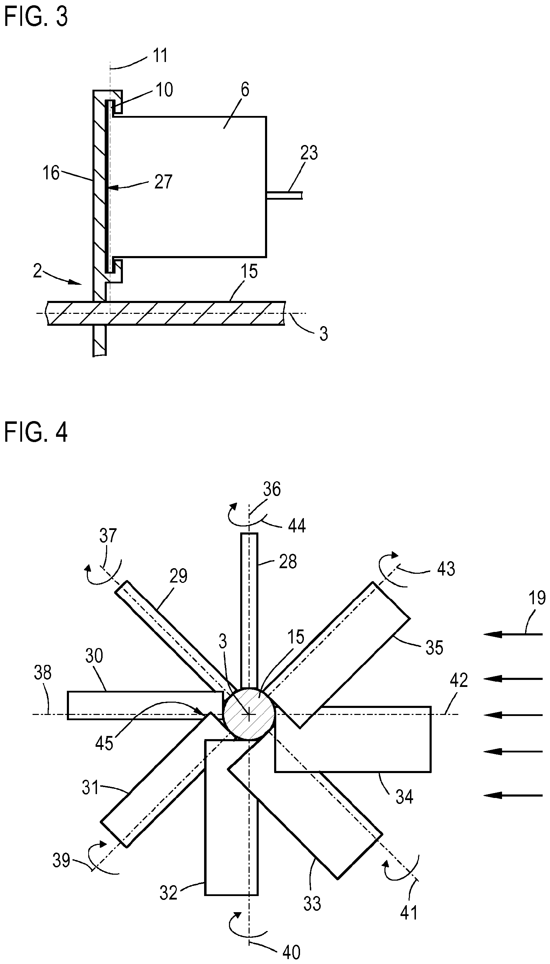

Wie in Fig. 3 dargestellt ist, weisen die einzelnen Anströmelemente 6 bis 9 an einer jeweiligen Kante 27 eine Lagereinrichtung 10 zur schwenkbaren Lagerung an der Trageinrichtung 2 auf. Die Lagereinrichtung 10 ist im in Fig. 3 gezeigten Beispiel dadurch ausgebildet, dass Zapfen im Bereich der Kante 27 vorstehen, die in Ausnehmungen der Lagereinrichtung 2 bzw. des Lagerelements 16 eingreifen, um das jeweilige Anströmelement 6 bis 9 um eine jeweilige Drehachse 11 bis 14 drehbar zu lagern.

Die Schwenkachsen 11 bis 14 stehen gewinkelt, im gezeigten Beispiel näherungsweise senkrecht, auf der Drehachse 3. Durch eine solche Verschwenkbarkeit wird erreicht, dass die Anströmfläche 21 in einer ersten Schwenkstellung im Wesentlichen senkrecht zu der in Fig. 2 durch die Pfeile 19 dargestellten Strömung stehen kann, wie dies für das Anströmelement 6 dargestellt ist, womit der Kraftübertrag von der Strömung auf das Anströmelement 6 maximal wird. In einer zweiten Schwenkstellung, die für das Anströmelement 7 dargestellt ist, ist der Winkel zwischen der Anströmfläche 21 und der Strömung sehr flach, so dass nur geringe Kräfte übertragen werden. Hieraus resultiert in der in Fig. 1 und 2 dargestellten Schwenkstellung der Anströmelemente 6 bis 9 aus der durch die Pfeile 19 dargestellten Strömung ein Drehmoment auf die Trageinrichtung 2 in die durch den Pfeil 20 dargestellte Richtung. Das Anströmelement 6 wird somit in der Fig. 1 in die Bildebene hineingedreht bzw. in Fig. 2 nach links gedreht. Die Drehung der Trageinrichtung 2 und somit der Welle 15 wird über ein Getriebe 17, insbesondere ein Planetengetriebe, zu einem Generator 18 übertragen und dort zur Stromerzeugung genutzt. Hierdurch kann beispielsweise eine nicht gezeigte Batterie geladen werden oder der Strom kann über nicht gezeigte Kabel von dem Wasser- und/oder Windkraftwerk 1 weggeführt werden.

Das Getriebe 17 wird genutzt, um bei relativ geringen Drehzahlen der Trageinrichtung 2 höhere Generatordrehzahlen zu erreichen. Dies kann insbesondere vorteilhaft sein, wenn der bereitgestellte Strom gleichgerichtet oder anderweitig konditioniert werden soll.

Der beschriebene Kraftübertrag erfordert, dass die Schwenkelemente 6 in der gezeigten Stellung nicht weiter in die Bildebene der Fig. 1 hinein bzw. in der Fig. 2 nach links schwenken können. Daher ist der Schwenkbereich der Anströmelemente 6 bis 9, innerhalb dem das jeweilige Anströmelement 6 bis 9 um die Schwenkachse 11 bis 14 verschwenkbar ist, einseitig durch einen jeweiligen Anschlagbereich 22 der Trageinrichtung begrenzt. Der jeweilige Anschlagbereich 22 wird im gezeigten Beispiel für die Anströmelemente 6 bis 9 durch Stangen 23 bis 26 gebildet, die jeweils parallel zu der Drehachse 3 verlaufen und an den beiden Tragelementen 16 befestigt sind. In der in Fig. 1 und 2 gezeigten Stellung liegt somit das Anströmelement 6 an dem Anschlagbereich 22 bzw. an der Stange 23 an. Während das Anströmelement 6 an dem Anschlagbereich 22 anliegt, erstreckt sich eine Längsrichtung dieses Anströmelements 6, also die Richtung senkrecht zu der Schwenkachse 11, im Wesentlichen parallel zu einer Ebene, die durch die Schwenkachse 11 und die Drehachse 3 aufgespannt wird. Hierdurch wird erreicht, dass die Anströmfläche 21 zumindest in der gezeigten Drehstellung im Wesentlichen senkrecht zu einer Strömung steht, wenn diese senkrecht zur Drehachse 3 verläuft. Dies ermöglicht den vorangehend erläuterten hohen Kraftübertrag von der Strömung auf das Anströmelement 6.

In die andere Richtung kann der Schwenkbereich der Anströmelemente 6 bis 9 durch einen trageinrichtungsseitigen Anschlag begrenzt werden oder die Anströmelemente 6 bis 9 können, wenn sie nahegenug aneinander angeordnet sind, wie später noch genauer erläutert werden wird, beim Öffnen aneinander anschlagen. Innerhalb des Schwenkbereichs können die Schwenkelemente 6 bis 9 soweit verschwenken, dass sie in einer offenen Schwenkstellung, die beispielsweise für das Anströmelement 7 dargestellt ist, gewinkelt mit einem Winkel von beispielsweise 60° bis 80° zu der durch die Drehachse 3 und die jeweilige Schwenkachse 11 bis 14 aufgespannten Ebene stehen. Hierdurch wird erreicht, dass eine Strömung unabhängig von der Drehstellung der Trageinrichtung 2 nur sehr geringe Kräfte auf ein derart verschwenktes Anströmelement 6 bis 9 übertragen kann, da die Anströmfläche 21 gewinkelt zu der Strömungsrichtung steht.

Aufgrund der beschriebenen Lagerung der Anströmelemente 6 bis 9 und der Nutzung der Anschlagflächen 22 bzw. der Stangen 23 bis 26 wird erreicht, dass bei der Drehung der Trageinrichtung 2 die Anströmelemente 6 bis 9 automatisch so verschwenkt werden, dass die Anströmelemente 6 bis 9, die bei der aktuellen Drehstellung der Trageinrichtung 2 oberhalb der Drehachse 3 liegen, insgesamt einen höheren Strömungswiderstand aufweisen als jene Anströmelemente 6 bis 9, die bei dieser Drehstellung unterhalb der Drehachse 3 liegen. Hierdurch wird ermöglicht, dass durch die durch die Pfeile 19 dargestellte Strömung kontinuierlich ein Drehmoment auf die Trageinrichtung 2 übertragen wird, das zur Stromerzeugung zum Generator geführt werden kann.

In der in Fig. 2 gezeigten Stellung wird das Schwenkelement 6 durch die Strömung gegen die Stange 23 gepresst. Auf das Schwenkelement 9 wirkt keine derartige Kraft mehr, so dass durch die Drehung der Trageinrichtung 2 bzw. nach einer etwas weiteren Drehung der Trageinrichtung 2 in die durch den Pfeil 20 gezeigte Richtung durch die Strömung 19 das Anströmelement 9 aufgeschwenkt wird, das heißt anfängt sich parallel zur Strömung auszurichten. In der für das Anströmelement 7 gezeigten Stellung wird das Anströmelement 7 durch die Strömung in der offenen Stellung gehalten. In der für das Anströmelement 8 gezeigten Stellung wirkt durch die Strömung kein Drehmoment um die Schwenkachse 13 mehr auf das Anströmelement 8. Wird die Trageinrichtung 2 nun in Richtung des Pfeils 20 weiterbewegt, so übt die Strömung 19 ein Drehmoment auf das Anströmelement 8 um die Schwenkachse 13 aus, so dass dieses in Richtung der Stange 25 verschwenkt wird. Hierdurch wird es kontinuierlich in die für das Anströmelement 6 gezeigte Stellung verschwenkt.

Der Wirkungsgrades des Wasser- und/oder Windkraftwerks 1 kann potentiell weiter erhöht werden, wenn in Umfangsrichtung um die Drehachse 3 an einer jeweiligen Axialposition der Drehachse eine größere Anzahl von Anströmelementen angeordnet wird. Ein Beispiel hierfür ist schematisch in Fig. 4 dargestellt. In diesem Ausführungsbeispiel werden acht Anströmelemente 28 bis 35 genutzt, die um eine jeweilige Schwenkachse 36 bis 43 schwenkbar sind. Aus Übersichtlichkeitsgründen sind die Anschlagbereiche in Fig. 4 nicht dargestellt. Die Pfeile 44 zeigen jeweils an, in welche Richtung ein Drehmoment auf die Anströmelemente 28 bis 35 durch die durch die Pfeile 19 dargestellte Strömung ausgeübt wird.

Die Anströmelemente 28 und 29 liegen an den hier nicht gezeigten Anschlagbereichen an, so dass ihre jeweiligen Anströmflächen im Wesentlichen senkrecht zur Strömung stehen. Eine weitere Drehung ist daher blockiert. Ungefähr ab der Position, die für das Anströmelement 30 dargestellt ist, beginnt ein Aufschwenken der Anströmelemente 28 bis 35, so dass eine zur jeweiligen Schwenkachse 36 bis 43 senkrecht verlaufende Längsrichtung des jeweiligen Anströmelements 28 bis 35 von einer durch die Schwenkachse 36 bis 43 und die Drehachse 3 aufgespannten Ebene wegschwingt. Hierbei erfolgt das Aufschwingen fächerartig. Beispielsweise ist das Anströmelement 31 in einer Stellung gezeigt, in der es bereits mit einem Kontaktabschnitt 45 an einem in Umfangsrichtung benachbarten Anströmelement 30 anliegt. Hierdurch führt ein weiteres Aufschwenken des Anströmelements 31 automatisch auch zu einer Verschwenkung des Anströmelements 30. In der für das Anströmelement 35 gezeigten Stellung wird hingegen das Anströmelement 35 bereits wieder um die Drehachse 43 in Richtung der geschlossenen Stellung verschwenkt, so dass es von dem in Umfangsrichtung benachbarten Anströmelement 34 abgehoben wird.

In dem Wasser- und/oder Windkraftwerk 1 ist es vorteilhaft, wenn Lebewesen und zumindest großteilige Schmutzteile aus dem Bereich der verschwenkbaren Anströmelemente 6 bis 9 bzw. 28 bis 35 herausgehalten werden. Daher weist das Wasser- und/oder Windkraftwerk 1, wie in Fig. 1 schematisch dargestellt ist, vorzugsweise eine Hülle 47 auf, die einen Innenraum 46, in dem die Anströmelemente 6 bis 9 angeordnet sind, umgibt. Die Hülle 47 wird vorzugsweise mit der Trageinrichtung 2 mitgedreht. Beispielsweise kann sie an den Tragelementen 16 befestigt sein. Hierdurch wird erreicht, dass an einer strömungszugewandten Seite der Hülle 47 abgelagerte Verunreinigungen nach einem Weiterdrehen der Trageinrichtung 2 an der strömungsabgewandten Seite wieder ausgewaschen werden. Die Hülle 47 ist für Wasser- und/oder Luftströmungen weitgehend durchlässig. Beispielsweise kann die Hülle 47 durch einen Maschendraht, ein Lochblech oder Ähnliches gebildet werden.

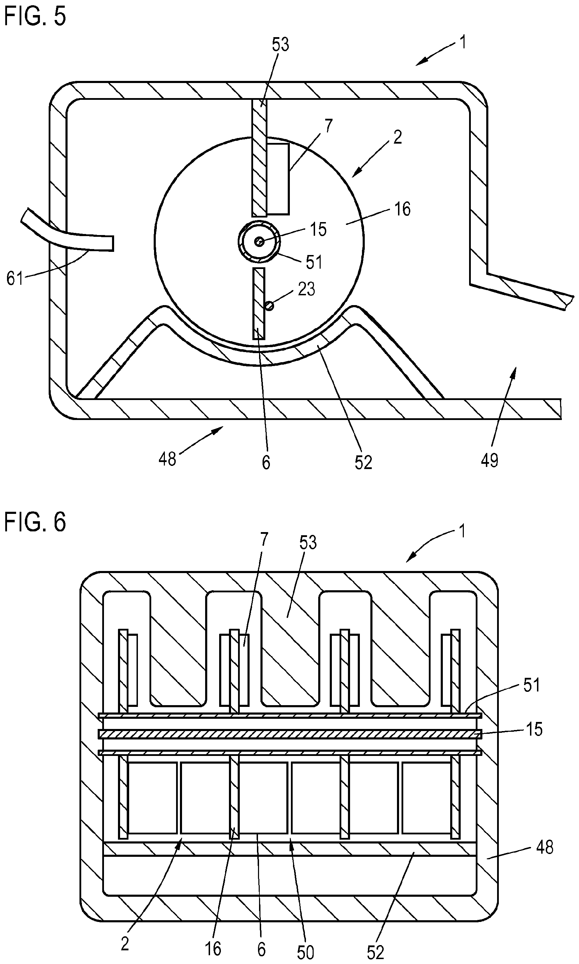

Fig. 5 und 6 zeigen verschiedene Ansichten eines weiteren Ausführungsbeispiels eines erfindungsgemäßen Wasser- und/oder Windkraftwerks. Für bereits beschriebene Komponenten oder diesen wirkungsähnliche Komponenten werden die bereits eingeführten Bezugszeichen verwendet und es werden, um unnötige Wiederholungen zu vermeiden, nur die Unterschiede zu den bisherigen Ausführungsbeispielen erläutert.

Das in Fig. 5 und 6 dargestellte Kraftwerk ist insbesondere als Wasserkraftwerk 1 geeignet. Die Trageinrichtung 2 ist hierbei in einem Gehäuse 48 angeordnet, dass die Trageinrichtung 2 lagert und abgesehen von einer Einlassöffnung 61 und einer Auslassöffnung 49 Wasserdicht abgeschlossen ist. Eine solche Anordnung ist beispielsweise vorteilhaft, wenn Wasser der Trageinrichtung 2 mit einer relativ großen Fallhöhe von mehreren Metern zugeführt werden soll. Zudem kann weitgehend vermieden werden, dass Wasser an der Trageinrichtung 2 vorbeiströmt.

In Fig. 5 und 6 sind primär Elemente dargestellt, die zu einer optimalen Strömungsführung dienen. Daher sind pro Tragelement 16 und Seitenfläche vereinfachend nur ein an der Stange 23 anliegendes Anströmelement 6 und ein offenes, an dem Tragelement 16 anliegendes Anströmelement 7 dargestellt. Die im Folgenden diskutierten Komponenten dienen dazu, möglichst große Teile des einströmenden Wassers zu den geschlossenen Anströmelementen 6 zu führen.

Hierzu ist es vorteilhaft, dass die Tragelemente 16, abgesehen von kleinen, nicht gezeigten Öffnungen wasserdicht sind. Zudem sind die Abmessungen der Anströmelemente in eine Längsrichtung senkrecht zur Schwenkachse so gewählt, dass bei den geschlossenen Anströmelementen 6 nur ein kleiner Spalt 50 zwischen benachbarten Anströmelementen 6 verbleibt. Somit ist ein axiales Ausweichen des Wassers kaum möglich.

Zur radialen Einschränkung des Wasserpfades dient einerseits ein um die Welle 15 herum angeordnetes, mitdrehendes Rohr 51. Zwischen diesem und der radialen Innenseite der Anströmelemente 6 verbleibt nur ein sehr schmaler Spalt. Außenseitig ist ein bezüglich des Gehäuses 48 feststehendes Umlenkelement 52 angeordnet, dass über einen Winkelbereich von ca. 60° im Wesentlichen kreisförmig parallel zu der Außenkante der Tragelemente 16 verläuft. Diese radiale Einschränkung des Strömungspfades führt dazu, dass in dem unteren Bereich, in dem erwartet wird, dass die Anströmelemente 16 geschlossen sind, also im Wesentlichen senkrecht zur Strömungsrichtung stehen, vorübergehend nahezu dichte Kammern entstehen, aus denen das Wasser im Wesentlichen nur entweichen kann, indem es die Trageinrichtung 2 dreht.

Zur Verstärkung dieses Effekts ist ein plattenförmiges Sperrelement 53 vorgesehen, dass drehfest an dem Gehäuse 48, also an einem die Trageinrichtung 2 lagernden Grundgestell, befestigt ist und von oben in den zwischen jeweils zwei der Tragelemente liegenden Bereich eingreift. Somit resultiert eine kammartige Struktur des Sperrelements. Durch das Sperrelement wird erreicht, dass auch bei einem Rückstauen des Wassers bis über das Niveau der Welle 15 bzw. der Drehachse 3 nur ein Bruchteil des Wassers oberhalb der Drehachse 3 passieren kann, wodurch auch in solchen Betriebssituationen ein Großteil des einströmenden Wassers die Trageinrichtung 2 und somit das Wasserkraftwerk 1 antreibt.

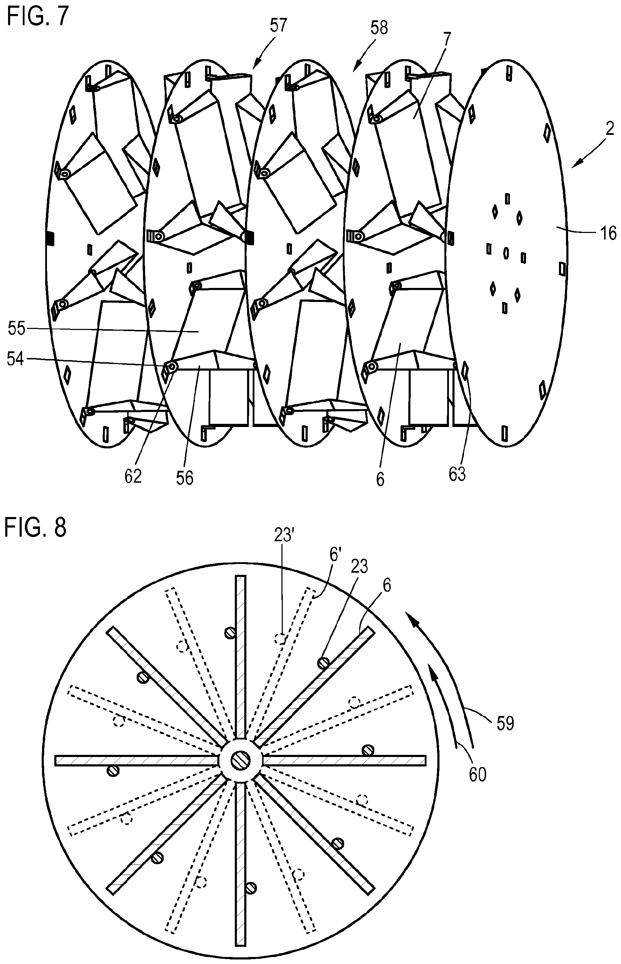

Fig. 7 und 8 zeigen verschiedene Komponenten eines weiteren Ausführungsbeispiels eines erfindungsgemäßen Wasser- und/oder Windkraftwerks. Für bereits beschriebene Komponenten oder diesen wirkungsähnliche Komponenten werden die bereits eingeführten Bezugszeichen verwendet und es werden, um unnötige Wiederholungen zu vermeiden, nur die Unterschiede zu den bisherigen Ausführungsbeispielen erläutert.

Fig. 7 zeigt eine perspektivische Ansicht einer Trageinrichtung 2, wobei aus Übersichtlichkeitsgründen weder die Welle, an der die Tragelemente 16 gehaltert sind, noch die in Fig. 8 gezeigten Stangen 23, 23', die die Anschlagsbereiche für die Anströmelemente 6, 7 bilden, gezeigt sind. Die Tragelemente 16 weisen Öffnungen 63 auf, die jedoch nur einen sehr kleinen Flächenanteil in Anspruch nehmen, womit nur wenig Wasser seitlich durch die Tragelemente 16hindurchtreten kann. Diese Öffnungen resultieren daraus, dass in den einzelnen Scheiben, die z.B. aus Blech bestehen, Laschen 62 freigeschnitten und herausgewinkelt sind, um die Anströmelemente 6, 7 zu haltern.

Die Anströmelemente 6, 7 weisen einen mittleren Abschnitt 55 in Form einer ebenen Platte auf, von dem Randabschnitte 56 abgekantet sind. Diese Randabschnitte 56 weisen eine Lagereinrichtung 54, nämlich einen durch eine jeweilige Ausnehmung des Randabschnitts 56 und der Lasche 62 geführten Bolzen auf, um die Anströmabschnitte 6, 7 an den Tragelementen16 zu lagern.

Wie in Fig. 7 zu erkennen ist, sind die Anströmelemente 6, 7 in zueinander benachbarten Zwischenräumen 57, 58 zwischen je zwei Tragelementen 16 in Umfangsrichtung zueinander versetzt. Dies ist im Detail in Figur 8 dargestellt, die schematisch eine Draufsicht auf eines der Tragelemente 16 zeigt. Die durchgezogen dargestellten Anströmelemente 6 und Stangen 23 sind hierbei an der dem Betrachter zugewandten Seite des Tragelements 16 angeordnet. Sie sind mit einem Winkelabstand 59 in Umfangsrichtung um das Tragelement 16 verteilt. Die gestrichelten Anströmelemente 6' und Stangen 23' sind auf der vom Betrachter abgewandten Seite des Tragelements 16 angeordnet und mit gleichem Winkelabstand 59 um das Tragelement 16 verteilt, wobei ihre Verteilung um eine Winkelverschiebung 60 versetzt ist, die dem halben Winkelabstand 59 entspricht. Durch diese versetzte Anordnung kann ein Gleichlauf der Trageinrichtung verbessert werden.

## Patentansprüche

1. Wasser- und/oder Windkraftwerk, umfassend eine um eine Drehachse (3) drehbar gelagerte Trageinrichtung (2) mit mehreren an der Trageinrichtung (2) um eine jeweilige Schwenkachse (11 - 14, 36 - 43) schwenkbar gelagerten Anströmelementen (6 - 9, 28 - 35), die durch eine Luft- oder Wasserströmung anströmbar sind, um eine Drehung der Trageinrichtung (2) anzutreiben, und einen Generator (18) zur Bereitstellung von Strom bei Drehung der Trageinrichtung (2), wobei die Schwenkachsen (11 - 14, 36 - 43) gewinkelt, insbesondere mit einem Winkel von mehr als 60° oder senkrecht, zu der Drehachse (3) verlaufen, wobei ein jeweiliger Schwenkbereich des jeweiligen Anströmelements (6 - 9, 28 - 35), innerhalb dem das jeweilige Anströmelement (6 - 9, 28 - 35) um die Schwenkachse (11 - 14, 36 - 43) verschwenkbar ist, einseitig durch einen Anschlagbereich (22) der Trageinrichtung (2) begrenzt wird, wobei die Anschlagbereiche (22) durch Stangen (23 - 26) gebildet werden, die sich parallel zu der Drehachse (3) erstrecken, wobei die Trageinrichtung (2) zwei scheibenförmige Tragelemente (16) umfasst, die in einem Winkel von wenigstens 60°, vorzugsweise senkrecht, zu der Drehachse (3) stehen, in Richtung der Drehachse (3) voneinander beabstandet sind, und an denen zumindest einige der Anströmelemente (6 - 9, 28 - 35) verschwenkbar gelagert sind, **dadurch gekennzeichnet, dass** die Tragelemente (16) starr miteinander verbunden sind, wobei die Stangen (23 - 26) jeweils an beiden Tragelementen (16) an einer radial von der Drehachse (3) beabstandeten Befestigungsposition befestigt sind.

2. Wasser- und/oder Windkraftwerk nach Anspruch 1, , **dadurch gekennzeichnet, dass** sich die Anströmelemente (6 - 9, 28 - 35) jeweils in eine Längsrichtung des jeweiligen Anströmelements (6 - 9, 28 - 35) senkrecht zu der jeweiligen Schwenkachse (11 - 14, 36 - 43) erstrecken, wobei bei einem Anliegen des jeweiligen Anströmelements (6 - 9, 28 - 35) an dem Anschlagbereich (22) die Längsrichtung mit einer durch die Schwenkachse (11 - 14, 36 - 43) und die Drehachse (3) aufgespannten Ebene einen Winkel von weniger als 30° oder weniger als 15° einschließt oder parallel zu dieser Ebene ist.

3. Wasser- und/oder Windkraftwerk nach Anspruch 2, **dadurch gekennzeichnet, dass** die Trageinrichtung (2) ein Rohr (51) oder eine Welle (15) umfasst, das oder die parallel zur Drehachse (3) verläuft, wobei bei einem Anliegen eines jeweiligen Anströmelements (6 - 9, 28 - 35) an dem Anschlagbereich (22) der Abstand zwischen der äußeren Mantelfläche des Rohrs (51) oder der Welle (15) und einer radialen Innenfläche des jeweiligen Anströmelements (6 - 9, 28 - 35) über die gesamte Länge des Anströmelements (6 - 9, 28 - 35) in Längsrichtung kleiner als 10% der Ausdehnung des Anströmelements (6 - 9, 28 - 35) in eine parallel zur Schwenkachse (11 - 14, 36 - 43) verlaufende Hochrichtung ist.

4. Wasser- und/oder Windkraftwerk nach einem der vorangehenden Ansprüche, **dadurch gekennzeichnet, dass** die Tragelemente (16) jeweils als scheibenförmige Platte ausgeführt sind, die abgesehen von Öffnungen (63), die die Platte auf maximal 5% ihrer Fläche durchsetzen, wasserdicht oder luftdicht ist.

5. Wasser- und/oder Windkraftwerk nach Anspruch 4, **dadurch gekennzeichnet, dass** das Wasser und/oder Windkraftwerk (1) ein Umlenkelement (52) aufweist, das bezüglich eines die Trageinrichtung (2) drehbar lagernden Grundgestells (4) drehfest angeordnet ist und dass sich parallel zur Drehachse (3) erstreckt und diese in Umfangsrichtung über einen Winkelbereich von wenigstens 40° umgreift, wobei der Abstand zwischen einer jeweiligen radialen Außenfläche der Tragelemente (16) und der der Drehachse (3) zugewandten Fläche des Umlenkelements (52) in diesem Winkelbereich maximal 20% des Abstands dieser Fläche des Umlenkelements (52) zu der Drehachse (3) ist.

6. Wasser- und/oder Windkraftwerk nach Anspruch 4 oder 5, **dadurch gekennzeichnet, dass** ein plattenförmiges Sperrelement (53) drehfest an dem oder einem die Trageinrichtung (2) drehbar lagernden Grundgestell (4) angeordnet ist, das sich an einer Position in Umfangsrichtung der Tragelemente (16) in einem zwischen den Tragelementen (16) liegenden Bereich erstreckt.

7. Wasser- und/oder Windkraftwerk nach einem der vorangehenden Ansprüche, **dadurch gekennzeichnet, dass** an mehreren Positionen in Umfangsrichtung der Tragelemente (16), die für beide Tragelemente (16) gleich sind, an beiden Tragelementen (16) an der jeweiligen Seitenfläche, die dem jeweils anderen Tragelement (16) zugewandt ist, ein jeweiliges Anströmelement (6 - 9, 28 - 35) angeordnet ist, wobei an wenigstens einem der Tragelemente an der von dem jeweils anderen Tragelement (16) abgewandten Seitenfläche weitere Anströmemente (6') angeordnet sind, die in Umfangsrichtung zu den an der dem jeweils anderen Tragelement zugewandten Seite angeordneten Anströmelementen (6 - 9, 28 - 35) versetzt sind.

8. Wasser und/oder Windkraftwerk nach einem der vorangehenden Ansprüche, **dadurch gekennzeichnet, dass** die Anströmelemente (6 - 9, 28 - 35) in einem mittleren Abschnitt (55) die Form einer ebenen Platte aufweisen, die sich parallel zu der Schwenkachse (11 - 14, 36 - 43) erstreckt, wobei ein bezüglich der Drehachse (3) radial außenliegender und/oder radial innenliegender Randabschnitt (56) des jeweiligen Anströmelements (6 - 9, 28 - 35) gegenüber dem mittleren Abschnitt (55) abgekantet ist.

9. Wasser- und/oder Windkraftwerk nach Anspruch 8, **dadurch gekennzeichnet, dass** die Anströmelemente (6 - 9, 28 - 35) in dem Randabschnitt (56) oder in den Randabschnitten (56) eine Lagereinrichtung (10) zur schwenkbaren Lagerung an der Trageinrichtung (2) aufweisen.

10. Wasser- und/oder Windkraftwerk nach einem der vorangehenden Ansprüche, **dadurch gekennzeichnet, dass** die Anströmelemente (6 - 9, 28 - 35) in einem durch eine Hülle (47) abgeschlossenen Innenraum (46) aufgenommen sind, wobei die Hülle (47) derart an der Trageinrichtung (2) befestigt ist, dass sie bei einer Drehung der Trageeinrichtung (2) um die Drehachse (3) mitgedreht wird, wobei die Hülle (47) für eine Wasser- und/oder Luftströmung zumindest teilweise durchlässig ist.

11. Wasser- und/oder Windkraftwerk nach einem der vorangehenden Ansprüche, **dadurch gekennzeichnet, dass** es ein Gehäuse (48) aufweist, in dem die Trageinrichtung (2) drehbar gelagert ist und das die Trageinrichtung (2) abgesehen von einer Einlassöffnung (61) und einer Auslassöffnung (49) wasserdicht oder luftdicht umschließt.

## Claims

1. Hydroelectric and/or wind power plant comprising a carrying device (2), which is mounted such that it can be rotated about an axis of rotation (3) and has a plurality of oncoming-flow elements (6-9, 28-35), which are mounted such that they can be pivoted about a respective pivot axis (11-14, 36-43) and against which air or water can flow, in order to drive rotation of the carrying device (2), and also comprising a generator (18) to provide electricity when the carrying device (2) rotates, wherein the pivot axes (11-14, 36-43) run at an angle, in particular at an angle of more than 60° or perpendicularly, to the axis of rotation (3), wherein a respective pivoting region of the respective oncoming-flow element (6-9, 28-35), within which the respective oncoming-flow element (6-9, 28-35) can be pivoted about the pivot axis (11-14, 36-43), is delimited on one side by a stop region (22) of the carrying device (2), wherein the stop regions (22) are formed by rods (23-26), which extend parallel to the axis of rotation (3), wherein the carrying device (2) comprises two disc-form carrying elements (16), which are located at an angle of at least 60°, preferably perpendicularly, to the axis of rotation (3), are spaced apart from one another in the direction of the axis of rotation (3) and on which at least some of the oncoming-flow elements (6-9, 28-35) are mounted in a pivotable manner, **characterized in that** the carrying elements (16) are connected rigidly to one another, wherein the rods (23-26) are fastened in each case on both carrying elements (16) at a fastening position which is spaced apart radially from the axis of rotation (3).

2. Hydroelectric and/or wind power plant according to Claim 1, **characterized in that**, as seen in a longitudinal direction of the respective oncoming-flow element (6-9, 28-35) in each case, the oncoming-flow elements (6-9, 28-35) extend perpendicularly to the respective pivot axis (11-14, 36-43), wherein, when the respective oncoming-flow element (6-9, 28-35) butts against the stop region (22), the longitudinal direction encloses an angle of less than 30°, or less than 15°, with a plane defined by the pivot axis (11-14, 36-43) and the axis of rotation (3), or is parallel to this plane.

3. Hydroelectric and/or wind power plant according to Claim 2, **characterized in that** the carrying device (2) comprises a tube (51) or a shaft (15), which runs parallel to the axis of rotation (3), wherein, when a respective oncoming-flow element (6-9, 28-35) butts against the stop region (22), the distance between the outer lateral surface of the tube (51) or of the shaft (15) and a radial inner surface of the respective oncoming-flow element (6-9, 28-35) over the entire length of the oncoming-flow element (6-9, 28-35), as seen in the longitudinal direction, is smaller than 10% of the extent of the oncoming-flow element (6-9, 28-35) in a vertical direction running parallel to the pivot axis (11-14, 36-43) .

4. Hydroelectric and/or wind power plant according to one of the preceding claims, **characterized in that** the carrying elements (16) are each designed as a disc-form plate which, with the exception of openings (63) which penetrate the plate over not more than 5% of its surface area, are water-tight or air-tight.

5. Hydroelectric and/or wind power plant according to Claim 4, **characterized in that** the hydroelectric and/or wind power plant (1) has a deflecting element (52), which is arranged in a rotationally fixed manner in relation to a main framework (4), the latter bearing the carrying device (2) in a rotatable manner, and which extends parallel to the axis of rotation (3) and encompasses the latter in the circumferential direction over an angle range of at least 40°, wherein, in this angle range, the distance between a respective radial outer surface of the carrying elements (16) and that surface of the deflecting element (52) which is directed towards the axis of rotation (3) is not more than 20% of the distance between this surface of the deflecting element (52) and the axis of rotation (3).

6. Hydroelectric and/or wind power plant according to Claim 4 or 5, **characterized in that** a plate-form blocking element (53) is arranged in a rotationally fixed manner on the or a main framework (4), the latter bearing the carrying device (2) in a rotatable manner, and, at a position in the circumferential direction of the carrying elements (16), the blocking element extends in a region between the carrying elements (16).

7. Hydroelectric and/or wind power plant according to one of the preceding claims, **characterized in that**, at a plurality of positions in the circumferential direction of the carrying elements (16), these positions being the same for both carrying elements (16), a respective oncoming-flow element (6-9, 28-35) is arranged on the respective side surface of the two carrying elements (16) which is directed towards the respectively other carrying element (16), wherein further oncoming-flow elements (6') are arranged on at least one of the carrying elements, on the side surface which is directed away from the respectively other carrying element (16), and these further oncoming-flow elements are offset in the circumferential direction in relation to the oncoming-flow elements (6-9, 28-35) arranged on the side which is directed towards the respectively other carrying element.

8. Hydroelectric and/or wind power plant according to one of the preceding claims, **characterized in that**, in a central portion (55), the oncoming-flow elements (6-9, 28-35) are in the form of a planar plate which extends parallel to the pivot axis (11-14, 36-43), wherein a radially outer and/or radially inner peripheral portion (56) of the respective oncoming-flow element (6-9, 28-35), as seen in respect of the axis of rotation (3), is angled in relation to the central portion (55).

9. Hydroelectric and/or wind power plant according to Claim 8, **characterized in that**, in the peripheral portion (56) or in the peripheral portions (56), the oncoming-flow elements (6-9, 28-35) have a bearing device (10) for pivotable bearing on the carrying device (2).

10. Hydroelectric and/or wind power plant according to one of the preceding claims, **characterized in that** the oncoming-flow elements (6-9, 28-35) are accommodated in an interior space (46) closed off by a shell (47), wherein the shell (47) is fastened on the carrying device (2) such that, when the carrying device (2) is rotated about the axis of rotation (3), the shell is rotated along therewith, wherein the shell (47) is at least partially permeable to a flow of water and/or air.

11. Hydroelectric and/or wind power plant according to one of the preceding claims, **characterized in that** it has a housing (48), in which the carrying device (2) is mounted in a rotatable manner and which, with the exception of an inlet opening (61) and an outlet opening (49), encloses the carrying device (2) in a water-tight or air-tight manner.

## Revendications

1. Centrale hydraulique et/ou éolienne, comportant un dispositif de support (2) monté rotatif autour d'un axe de rotation (3) et doté de plusieurs éléments d'écoulement (6 - 9, 28 - 35) montés pivotants autour d'un axe de pivotement (11 - 14, 36 - 43) respectif sur le dispositif de support (2), lesquels éléments d'écoulement peuvent être exposés à un écoulement d'air ou d'eau, afin d'entraîner une rotation du dispositif de support (2), et un générateur (18) servant à la production de courant électrique lors de la rotation du dispositif de support (2), les axes de pivotement (11 - 14, 36 - 43) s'étendant de manière inclinée, en particulier suivant un angle de plus de 60° ou perpendiculairement, par rapport à l'axe de rotation (3), une région de pivotement respective de l'élément d'écoulement (6 - 9, 28 - 35) respectif, à l'intérieur de laquelle l'élément d'écoulement (6 - 9, 28 - 35) respectif peut pivoter autour de l'axe de pivotement (11 - 14, 36 - 43), étant limitée d'un côté par une région de butée (22) du dispositif de support (2), les régions de butée (22) étant formées par des tiges (23 - 26) qui s'étendent parallèlement à l'axe de rotation (3), le dispositif de support (2) comportant deux éléments de support (16) en forme de disques, qui se trouvent à un angle d'au moins 60°, de préférence perpendiculaire, par rapport à l'axe de rotation (3), sont espacés l'un de l'autre dans la direction de l'axe de rotation (3), et sur lesquels au moins certains des éléments d'écoulement (6 - 9, 28 - 35) sont montés pivotants, **caractérisée en ce que** les éléments de support (16) sont reliés rigidement l'un à l'autre, les tiges (23 - 26) étant fixées respectivement aux deux éléments de support (16) à une position de fixation espacée radialement de l'axe de rotation (3).

2. Centrale hydraulique et/ou éolienne selon la revendication 1, **caractérisée en ce que** les éléments d'écoulement (6 - 9, 28 - 35) s'étendent respectivement dans une direction longitudinale de l'élément d'écoulement (6 - 9, 28 - 35) respectif perpendiculairement à l'axe de pivotement (11 - 14, 36 - 43) respectif, la direction longitudinale formant, avec un plan défini par l'axe de pivotement (11 - 14, 36 - 43) et l'axe de rotation (3), un angle de moins de 30° ou de moins de 15° ou étant parallèle à ce plan, en cas d'appui de l'élément d'écoulement (6 - 9, 28 - 35) respectif contre la région de butée (22).

3. Centrale hydraulique et/ou éolienne selon la revendication 2, **caractérisée en ce que** le dispositif de support (2) comporte un tube (51) ou un arbre (15), qui s'étend parallèlement à l'axe de rotation (3), la distance entre la surface d'enveloppe extérieure du tube (51) ou de l'arbre (15) et une surface intérieure radiale de l'élément d'écoulement (6 - 9, 28 - 35) respectif sur toute la longueur de l'élément d'écoulement (6 - 9, 28 - 35) dans la direction longitudinale étant inférieure à 10% de l'expansion de l'élément d'écoulement (6 - 9, 28 - 35) dans une direction verticale s'étendant parallèlement à l'axe de pivotement (11 - 14, 36 - 43), en cas d'appui d'un élément d'écoulement (6 - 9, 28 - 35) respectif contre la région de butée (22).

4. Centrale hydraulique et/ou éolienne selon l'une des revendications précédentes, **caractérisée en ce que** les éléments de support (16) sont réalisés respectivement sous la forme d'une plaque en forme de disque qui, hormis des ouvertures (63) qui traversent la plaque sur au maximum 5 % de sa surface, est étanche à l'eau ou étanche à l'air.

5. Centrale hydraulique et/ou éolienne selon la revendication 4, **caractérisée en ce que** la centrale hydraulique et/ou éolienne (1) comprend un élément de déviation (52) qui est disposé de manière bloquée en rotation par rapport à un bâti de base (4) supportant le dispositif de support (2) de manière rotative et qui s'étend parallèlement à l'axe de rotation (3) et enveloppe celui-ci dans la direction périphérique sur une plage angulaire d'au moins 40°, la distance entre une surface extérieure radiale respective des éléments de support (16) et la surface de l'élément de déviation (52) tournée vers l'axe de rotation (3) dans cette plage angulaire étant au maximum 20 % de la distance de cette surface de l'élément de déviation (52) par rapport à l'axe de rotation (3).

6. Centrale hydraulique et/ou éolienne selon la revendication 4 ou 5, **caractérisée en ce qu'**un élément de blocage (53) en forme de plaque est disposé de manière bloquée en rotation sur le ou un bâti de base (4) supportant le dispositif de support (2) de manière rotative, lequel élément de blocage s'étend dans une région entre les éléments de support (16) à une position dans la direction périphérique des éléments de support (16) .

7. Centrale hydraulique et/ou éolienne selon l'une des revendications précédentes, **caractérisée en ce qu'**un élément d'écoulement (6 - 9, 28 - 35) respectif est disposé, à plusieurs positions dans la direction périphérique des éléments de support (16) qui sont identiques pour les deux éléments de support (16), sur les deux éléments de support (16) sur la surface latérale respective qui est tournée vers l'autre élément de support (16) respectif, d'autres éléments d'écoulement (6') étant disposés sur au moins l'un des éléments de support sur la surface latérale opposée à l'autre élément de support (16) respectif, lesquels autres éléments d'écoulement sont décalés, dans la direction périphérique, par rapport aux éléments d'écoulement (6 - 9, 28 - 35) disposés sur le côté tourné vers l'autre élément de support respectif.

8. Centrale hydraulique et/ou éolienne selon l'une des revendications précédentes, **caractérisée en ce que** les éléments d'écoulement (6 - 9, 28 - 35) présentent la forme d'une plaque plane dans une partie centrale (55), laquelle plaque s'étend parallèlement à l'axe de pivotement (11 - 14, 36 - 43), une partie de bord (56) de l'élément d'écoulement (6 - 9, 28 - 35) respectif, laquelle est située radialement à l'extérieur et/ou radialement à l'intérieur par rapport à l'axe de rotation (3), étant repliée par rapport à la partie centrale (55).

9. Centrale hydraulique et/ou éolienne selon la revendication 8, **caractérisée en ce que** les éléments d'écoulement (6 - 9, 28 - 35) comprennent, dans la partie de bord (56) ou dans les parties de bord (56), un dispositif de palier (10) pour le montage pivotant sur le dispositif de support (2).

10. Centrale hydraulique et/ou éolienne selon l'une des revendications précédentes, **caractérisée en ce que** les éléments d'écoulement (6 - 9, 28 - 35) sont logés dans un espace intérieur (46) fermé par une enveloppe (47), l'enveloppe (47) étant fixée au dispositif de support (2) de manière à être entraînée conjointement en rotation en cas de rotation du dispositif de support (2) autour de l'axe de rotation (3), l'enveloppe (47) étant au moins partiellement perméable à un écoulement d'eau et/ou d'air.

11. Centrale hydraulique et/ou éolienne selon l'une des revendications précédentes, **caractérisée en ce qu'**elle comprend un carter (48) dans lequel le dispositif de support (2) est monté rotatif et qui entoure le dispositif de support (2) de manière étanche à l'eau ou étanche à l'air hormis une ouverture d'entrée (61) et une ouverture de sortie (49).
